# EUROPEAN PATENT APPLICATION

(11) **EP 4 318 904 A1**
(43) Date of publication of application: **07.02.2024**
(21) Application number: 22382759.3
(22) Date of filing: 04.08.2022
(51) Int. Cl.: H02M 1/00, H02M 7/219, H02M 1/32

(54) **INDUCTIVE ENERGY HARVESTER**

(71) Applicant: Aclara Technologies LLC, St. Louis, Missouri 63146 (US)
(72) Inventor: LLANO, Asier, Bilbao (ES)
(74) Representative: Lecomte & Partners

(57) **Abstract**

An energy harvesting system including a conductor that conducts a first current, a transformer that outputs a second current based on the first current flowing through the conductor, an energy storage device, and a rectifier connected between the transformer and the energy storage device, the rectifier including a first switch, a second switch, a first diode, and a second diode. The energy harvesting system further includes a control circuit communicatively coupled to the first and second switches, the control circuit configured to turn on the first and second switches to prevent charging of the energy storage device when a voltage across the energy storage device exceeds a threshold and turn off the first and second switches to charge the energy storage device with a DC current output by the rectifier when the voltage across the energy storage device is less than the threshold.

## Description

### FIELD

The present disclosure relates generally to wiring devices that include direct current (DC) output ports.

### SUMMARY

Electrical power distribution networks deliver power to various distribution transformers, which step down the power from a medium voltage level to a lower voltage that is provided to loads such as homes, businesses, etc. Such power distribution networks include various control and monitoring devices, such as breakers, reclosers, sensors, communication circuits, and other devices that control and/or monitor the network. The electronics included in these control and monitoring devices are often powered by the distribution network itself; however, existing solutions for harvesting energy from the distribution network to power the electronics included in these control and monitoring devices are inefficient and/or incapable of operating across a wide range of voltages and currents.

One aspect of the present disclosure provides an energy harvesting system that includes a conductor that conducts a first current, a transformer that outputs a second current based on the first current flowing through the conductor, an energy storage device, and a rectifier connected between the transformer and the energy storage device, the rectifier including a first switch, a second switch, a first diode, and a second diode. The energy harvesting system further includes a control circuit communicatively coupled to the first and second switches, the control circuit configured to turn on the first and second switches to prevent charging of the energy storage device when a voltage across the energy storage device exceeds a threshold and turn off the first and second switches to charge the energy storage device with a direct current (DC) output by the rectifier when the voltage across the energy storage device is less than the threshold.

Another aspect of the present disclosure provides an energy harvesting system including a rectifier configured to convert an alternating current (AC) harvested from a conductor into a direct current (DC), a first energy storage device connected to an output side of the rectifier, a switch connected in parallel with the first energy storage device, a second energy storage device connected in parallel with the first energy storage device, a DC-DC converter configured to control charging of the second energy storage device, and a control circuit connected to the switch and the DC-DC converter. The control circuit is configured to turn on the switch to prevent the DC current from charging the first energy storage device when a voltage across the first energy storage device exceeds a first threshold, turn off the switch to charge the first energy storage device with the DC current when the voltage across the first energy storage device is less than the first threshold, and turn on the DC-DC converter to charge the second energy storage device when the voltage across the first energy storage device exceeds a second threshold, the second threshold being less than the first threshold.

Another aspect of the present disclosure provides an energy harvesting system including a conductor that conducts a first current, a transformer that outputs a second current based on the first current flowing through the conductor, a first energy storage device, and a metal oxide semiconductor field effect transistor (MOSFET) that is turned on to prevent the second current from flowing to the first energy storage device when a voltage across the first energy storage device exceeds a first threshold. The energy harvesting system further includes a second energy storage device connected to the first energy storage device, a first DC-DC converter that is turned on to charge the second energy storage device when the voltage across the first energy storage device exceeds a second threshold, the second threshold being less than the first threshold, a third energy storage device connected to the first energy storage device, and a second DC-DC converter that is turned on to charge the third energy storage device when the voltage across the first energy storage device exceeds a third threshold, the third threshold being greater than the second threshold and less than the first threshold.

Another aspect of the present disclosure provides a method of harvesting power from a power distribution network. The method includes receiving, via a transformer, an input current from a conductor included in the power distribution network, determining a voltage across a first energy storage device, controlling a DC-DC converter to charge a second energy storage device when the voltage across the first energy storage device is greater than a first threshold, and turning off first and second switches to prevent charging of the first energy storage device when the voltage across the first energy storage device is greater than a second threshold.

Other aspects of the application will become apparent by consideration of the detailed description and accompanying drawings.

### BRIEF DESCRIPTION OF THE DRAWINGS

FIG. 1 illustrates a block diagram of a energy harvesting system, according to some aspects.
FIG. 2 illustrates a block diagram of a energy harvesting system, according to some aspects.
FIG. 3 illustrates a schematic diagram of a power harvesting circuit included in the energy harvesting systems of FIG. 1 or FIG. 2, according to some aspects.
FIG. 4 illustrates a schematic diagram of a power harvesting circuit included in the energy harvesting systems of FIG. 1 or FIG. 2, according to some aspects.
FIG. 5 illustrates a state table of the power harvesting circuit of FIG. 4, according to some aspects.
FIG. 6 is a flowchart illustrating a method for harvesting power from a distribution network, according to some aspects.
FIG. 7 illustrates a schematic diagram of a power harvesting circuit included in the energy harvesting systems of FIG. 1 or FIG. 2, according to some aspects.
FIG. 8 illustrates a schematic diagram of a power harvesting circuit included in the energy harvesting systems of FIG. 1 or FIG. 2, according to some aspects.

### DETAILED DESCRIPTION

Before any aspects of the present disclosure are explained in detail, it is to be understood that the disclosure is not limited in its application to the details of construction and the arrangement of components set forth in the following description or illustrated in the following drawings. The aspects described herein are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that the aspects described herein may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

Functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not explicitly listed.

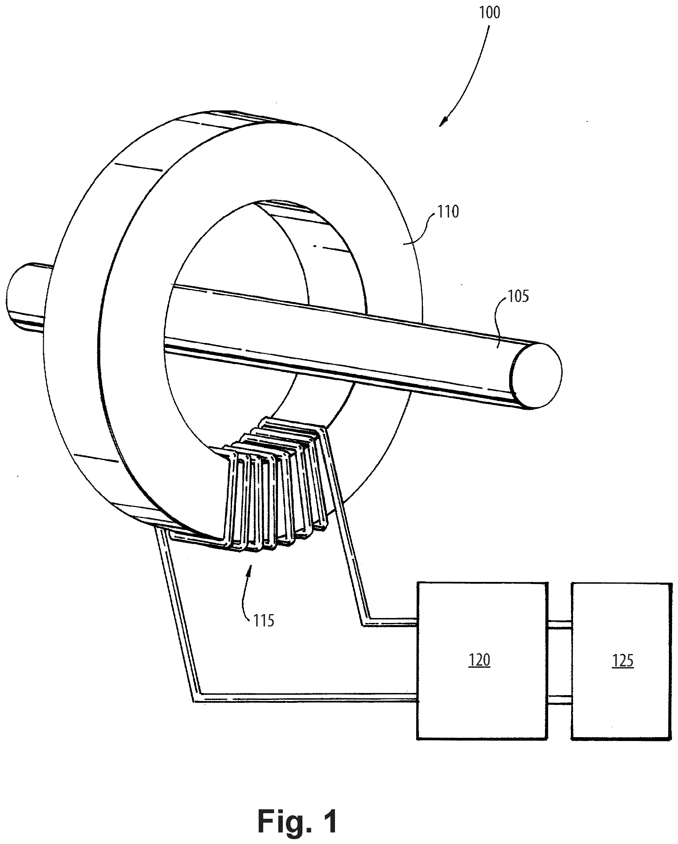

FIG. 1 is a functional block diagram of an exemple energy harvesting system 100, according to some aspects of the present disclosure. The energy harvesting system 100 harvests energy from a power distribution network to power electronics included in a device, such as a switching device or monitoring device, that is connected to a power distribution network. For example, the energy harvesting system 100 harvests energy from the power distribution network to power the electronics included in a switching device, such as a recloser or circuit breaker, a monitoring device, such as a voltage sensor, a communication device, or some other device connected to the power distribution network. However, it should be understood that in some instances, the energy harvesting system 100 is implemented in other applications.

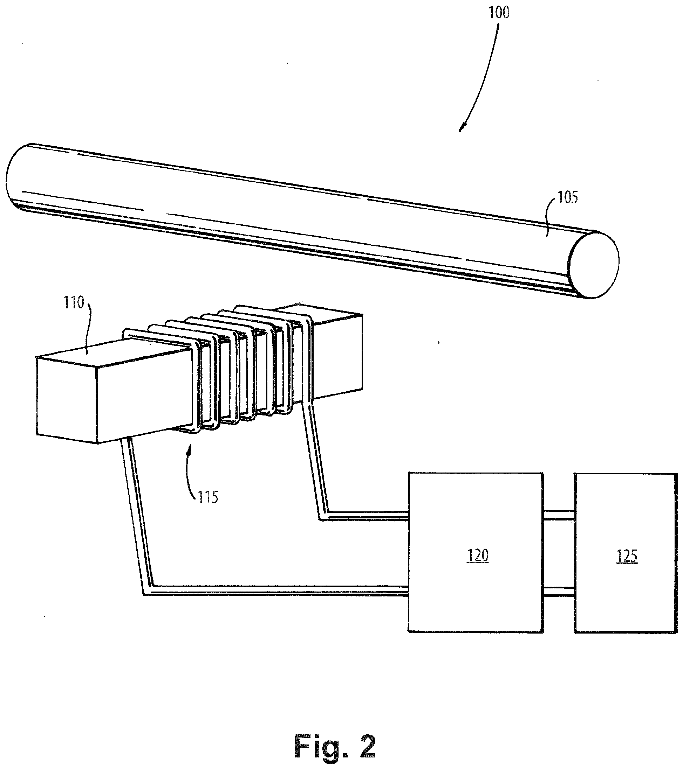

The energy harvesting system 100 includes a conductor 105, such as a power line included in the power distribution network, that conducts current. The energy harvesting system 100 further includes a magnetic core 110. In some instances, such as in the illustrated example of FIG. 1, the magnetic core 110 is implemented as a closed core or a split core. In other instances, such as in the illustrated example of FIG. 2, the magnetic core 100 is implemented as an open magnetic core 110. The current flowing through the conductor 105 applies a magnetomotive force to the magnetic core 110 such that magnetic flux is generated within the interior of the magnetic core 110. The magnetic flux generated within the interior of the magnetic core 110 induces a current in a secondary wire winding 115 that is wound around the magnetic core 110. Hereinafter, the magnetic core 110 and secondary wire winding 115 may collectively be referred to as a transformer.

The induced current flowing through the secondary wire winding 115, which may hereinafter be referred to as an input current, is provided to a power harvesting circuit 120. As will be described in more detail below, the power harvesting circuit 120 controls the amount of energy that is harvested from the conductor 105 via the magnetic core 110 and secondary wire winding 115. For example, in some instances, the power harvesting circuit 120 controls the amount of energy harvested from the conductor 105 based on factors such as overvoltage protection, overcurrent protection, impedance matching, signal rectification, voltage adaptation, energy storage, and energy excess discard. The energy harvested from the conductor 105 is stored in one or more energy storage components included in the power harvesting circuit 120. Furthermore, the energy harvested from the conductor 105 is converted by the power harvesting circuit 120 and used to power the one or more load devices 125 that are connected to the output side of the power harvesting circuit 120. As described above, the one or more load devices 125 may include the electronic components of a device connected to the power distribution network.

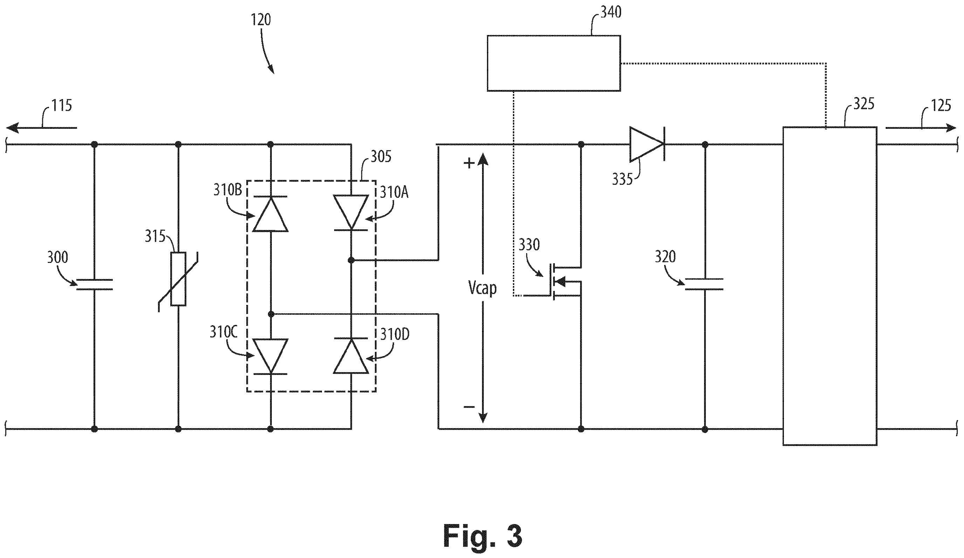

FIG. 3 illustrates an example schematic diagram of the power harvesting circuit 120, according to some aspects of the present disclosure. The input, or alternating current (AC), side of the power harvesting circuit 120 is connected to the secondary wire winding 115. The input side of the power harvesting circuit 120 includes an input capacitor 300 and a full wave rectifier circuit 305. The input capacitor 300 is configured to compensate for the effects of inductances of the secondary wire winding 115 and/or the magnetic core 110. Moreover, the full wave rectifier 305 includes four bridge diodes 310A-310D that are configured to convert the alternating current (AC) power received from the secondary wire winding 115 into direct current (DC) power. The input side of the power harvesting circuit 120 further includes a transient suppression component 315 that is configured to protect the power harvesting circuit 120 and the load device(s) 125 connected thereto from input overvoltage. In some instances, the transient suppression component 315 is implemented as one or more of a varistor, a zener diode, a DIAC, a gas discharger, or other similar device.

The output side of the power harvesting circuit 120, which is connected between the output side of the full wave rectifier 305 and the load device(s) 125, includes an energy storage device 320, a DC-DC converter 325, an active switch 330, and a reverse protection diode 335. The energy storage device 320 is configured to store energy harvested from the conductor 105 via the magnetic core 110 and the secondary winding 115. In the illustrated example, the energy storage device 320 is implemented as a capacitor. However, in some instances, the energy storage device 320 is implemented as a different type of storage device such as a battery. The DC-DC converter 325 is configured to control the voltage level at which power is output by the power harvesting circuit 120 to the load device(s) 125. In the illustrated example, the DC-DC converter 325 is controlled by a control circuit 340, which may be implemented as an analog control circuit or a digital control circuit.

During operation of the power harvesting circuit 120, the active switch 330 is controlled to clamp excess power (e.g., excess voltage and/or current) harvested from the conductor 105 via the magnetic core 110 and the secondary wire winding 115. For example, the control circuit 340 turns ON the active switch 330 to prevent excess power from being provided to the load device(s) 125 connected to the power harvesting circuit 120. That is, when current and/or voltage received from the secondary wire winding 115 exceeds one or more thresholds (e.g., 1000A and/or 40V), the control circuit 340 turns ON the active switch 330 to clamp the excess input power. While the active switch 330 is turned ON, current flows through two of the diodes 310A-310D and the active switch 330 at a single time. For example, during a positive half cycle of the input current, current flows through diodes 310A, 310C and the active switch 330 while the active switch 330 is turned ON. Likewise, during a negative half cycle of the input current, current flows through diodes 310B, 310D and the active switch 330 while the active switch 330 is turned ON. Furthermore, while the active switch 330 is turned ON to clamp excess energy, the energy storage device 320 is discharged to provide power to the load device(s) 125. The reverse protection diode 335 prevents current discharged by the energy storage device 320 from flowing through the active switch 330.

During operation of the energy harvesting system 100, it is desirable for the power harvesting circuit 120 to withstand high currents (e.g., currents of greater than 1000A) during fault and transient conditions without consuming excessive amounts of power. However, as described above, while the active switch 330 is turned ON and the power harvesting circuit 120 is performing excess energy clamping, current flows through two of the four diodes 310A-310D and the active switch 330. Thus, the two of the four diodes 310A-310D that conduct current and the active switch 330 dissipate heat and consume relatively large amounts of power during excess energy clamping. For example, the two of the four diodes 310A-310D that conduct current and the active switch 330 may consume 2 or more watts of power during excess energy clamping. Accordingly, increased operating efficiency of the power harvesting circuit 120 during excess power clamping is desired.

When the input power received from the secondary wire winding 115 does not exceed one or more thresholds, the control circuit 340 turns OFF the active switch 330 to stop the excess power clamping. While the active switch 330 is turned OFF, the power harvesting circuit 120 harvests energy from the conductor 105 to charge the energy storage device 320 and/or power the load device(s) 125. As shown in FIG. 3, current flows through two of the four bridge diodes 310A-310D and the reverse protection diode 335 at a given time while the active switch 330 is turned OFF. For example, during a positive half cycle of the input current, current flows through diodes 310A, 310C and the reverse protection diode 335 while the active switch 330 is turned OFF. Likewise, during a negative half cycle of the input current, current flows through diodes 310B, 310D and the reverse protection diode 335 while the active switch 330 is turned OFF. Current flowing through the reverse protection diode 335 is used to charge the energy storage device 320 and/or power the load device(s) 125.

It is also desirable for the power harvesting circuit 120 to efficiently harvest energy from the conductor 105 when input current provided by the secondary wire winding 115 is low. However, as described above, while the active switch 330 is turned OFF, current flows through two of the four bridge diodes 310A-310D and the reverse protection diode 335 at a given time to charge the energy storage device 320. Thus, the two of the four diodes 310A-310D that conduct current and the reverse protection diode 335 consume, or lose, power while energy is harvested from the conductor 105. Although power losses attributed to the bridge diodes 310A-310D and the reverse protection diode 335 are negligible when the voltage across the energy storage device 320 relatively large (e.g., 40V), the power losses attributed to the bridge diodes 310A-310D and the reverse protection diode 335 are significant when the voltage across the energy storage device 320 is relatively small (e.g., 5V).

In some instances, the energy storage device 320 is implemented as a high-capacitance supercapacitor that takes a long amount of time to be charged from a low voltage value (e.g., 5V) to a relatively high voltage value (e.g., 40V). In such instances, when the voltage across the energy storage device 320 is low (e.g., 5-10V) during startup of power harvesting, a large percentage of the power harvested from the conductor 105 is lost to consumption by the bridge diodes 310A-310D and the reverse protection diode 335. For example, if it is assumed that the respective voltage drop across each of the two bridge diodes 310A-310D that conduct current and the reverse protection diode 335 is 0.7V, approximately 42% of the energy harvested from the conductor 105 is lost to consumption by the bridge diodes 310A-310D and the reverse protection diode 335 when the voltage across the energy storage device 320 is 5V. In contrast, if it is assumed that the respective voltage drop across each of the two bridge diodes 310A-310D that conduct current and the reverse protection diode 335 is 0.7V, only about 5% of the energy harvested from the conductor 105 is lost to consumption by the bridge diodes 310A-310D and the reverse protection diode 335 when the voltage across the energy storage device 320 is 40V. Therefore, a power harvesting circuit that reduces the amount of time at which energy is harvested at low voltages is desired.

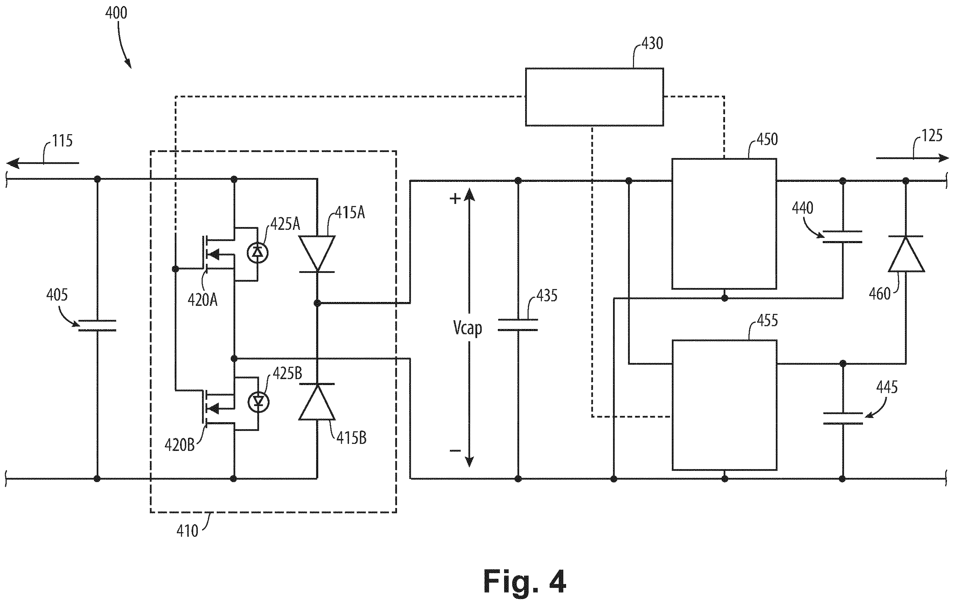

FIG. 4 illustrates an example circuit schematic for an improved power harvesting circuit 400 according to some aspects of the present disclosure. When compared to the power harvesting circuit 120 described above and shown in FIG. 3, the power harvesting circuit 400 operates more efficiently while clamping excess input power and while harvesting power from the conductor 105. That is, when the power harvesting circuit 400 is implemented in the energy harvesting system 100, less power is lost during excess power clamping and power harvesting when compared to a energy harvesting system 100 that includes the power harvesting circuit 120. As will be described in more detail below, the power harvesting circuit 400 uses fewer components to perform effective energy clamping and includes multiple energy storage levels to reduce the amount of time at which the power harvesting circuit 400 operates at low voltages. Furthermore, when compared to the power harvesting circuit 120, the configuration of power harvesting circuit 400 reduces the power-up, or start-up, time of the energy harvesting system 100 by delivering power to the load device(s) 125 even for situations in which long term energy storage devices included in the power harvesting circuit 400 have low charge levels.

As shown in FIG. 4, the power harvesting circuit 400 is connected between the secondary wire winding 115 and the load device(s) 125. Accordingly, the input current flowing through the secondary wire winding 115, which is ultimately harvested from the conductor 105, is provided to the input side of the power harvesting circuit 400. Similar to the power harvesting circuit 120, the input side the power harvesting circuit 400 includes an input capacitor 405 and a full wave rectifier 410. The input capacitor 405 is configured to assist with compensating the effects of the inductances of the secondary wire winding 115 and/or the magnetic core 110. Moreover, the full wave rectifier 410 is configured to convert the input power received from the secondary wire winding 115 into DC power used for powering the load device(s) 125.

However, unlike the full wave rectifier 305 included in the power harvesting circuit 120, the full wave rectifier 410 included in the power harvesting circuit 400 is not constructed from four bridge diodes. Rather, the full wave rectifier 410 included in the power harvesting circuit 400 includes two bridge diodes 415A, 415B and two clamping switches 420A, 420B. In the illustrated example, the clamping switches 420A, 420B are implemented as n-channel metal oxide semiconductor field effect transistors (MOSFETs) that include respective integrated body diodes 425A, 425B. That is, the clamping switch 420A is a MOSFET that includes a first integrated body diode 425A and the clamping switch 425B is a MOSFET that includes a second integrated body diode 425A. In some instances, other types of field effect transistors (FETs) are used to implement clamping switches 420A, 420B.

When the clamping switches 420A, 420B are turned OFF (e.g., not conducting current from drain to source), current flows through the integrated body diodes 425A, 425B included in the clamping switches 420A, 420B. Thus, when the clamping switches 420A, 420B are OFF, the bridge diodes 415A, 415B and integrated body diodes 425A, 425B rectify the AC input current harvested from the conductor 105. For example, during a positive half cycle of the input current, current flows through the bridge diode 415A and the integrated body diode 425B while the clamping switches 420A, 420B are turned OFF. Likewise, during a negative half cycle of the input current, current flows through the integrated body diode 425A and the bridge diode 415B while the clamping switches 420A, 420B are turned OFF.

While the clamping switches 420A, 420B are turned OFF and energy is being harvested from the conductor 105, the power harvesting circuit 400 experiences fewer power losses than the power harvesting circuit 120 described above and illustrated in FIG. 3. For example, while the power harvesting circuit 400 harvests energy from the conductor 105, current only flows through two diodes (e.g., one of the bridge diodes 415A, 415B and one of the integrated body diodes 425A, 425B) at a given time as the current does not also flow through a reverse protection diode. For example, during a positive half cycle of the AC input current, the bridge diode 415A and the integrated body diode 425B consume power while the clamping switches 420A, 420B are turned OFF. Likewise, during a negative half cycle of the input current, the integrated body diode 425A and the bridge diode 415B consume power while the clamping switches 420A, 420B are turned OFF. The power harvesting circuit 400 does not need or include a reverse protection diode connected between the full wave rectifier 410 and the energy storage devices because the orientation of the bridge diodes 415A, 415B prevents current flow from the energy storage devices back into a short circuit that is created when the clamping switches 420A, 420B are turned ON.

As described above with respect to the power harvesting circuit 120, current flows through three diodes (e.g., two of the four bridge diodes 310A-310D and the reverse protection diode 335) while the power harvesting circuit 120 harvests energy from the conductor 105. Thus, the three diodes that conduct current while the power harvesting circuit 120 harvests energy from the conductor 105 consume, or lose, more power than the two diodes that consume, or lose, power while the power harvesting circuit 400 harvests energy from the conductor 105. Accordingly, the power harvesting circuit 400 harvests energy from the conductor 105 more efficiently than the power harvesting circuit 120. Furthermore, the full wave rectifier 410 provides the added benefit of greatly reducing the amount of heat generated during power clamping when compared to the bridge diodes 310A-310 included in the power harvesting circuit 120. For example, when compared to the bridge diodes 310A-310D, the clamping switches 420A, 420B are able to withstand large input currents (e.g., continuous currents of 1000A, transient fault currents of 25000A, etc.) without overheating while the clamping switches 420A, 420B are turned ON to clamp excess input power.

As further shown in FIG. 4, the output, or DC, side the power harvesting circuit 400 includes multiple energy storage levels. In the illustrated example, the power harvesting circuit 400 includes three different energy storage devices: a short term energy storage device 435, a medium term energy storage device 440, and a long term energy storage device 445. However, in some instances, the power harvesting circuit 400 includes more or fewer than three different energy storage devices. For example, in some instances, the power harvesting circuit 400 includes only two energy storage devices, such as a short term energy storage device and a long term energy storage device. In other instances, the power harvesting circuit 400 includes four or more energy storage devices.

In some instances, the short term energy storage device 435 is implemented as a single capacitor, which may hereinafter be referred to as the short term capacitor 435. In such instances, the capacitance of the short term capacitor 435 is selected such that the energy storage capacity of the short term capacitor 435 is less than the respective energy storage capacities of the medium and long term energy storage devices 440, 445. In some instances, the short term energy storage device 435 is implemented as a plurality of capacitors connected in a series and/or parallel relationship. In some instances, other types of short term energy storage devices are used to implement the short term energy storage device 435. Energy discharged from the short term capacitor 435 is used to charge and/or power the medium term energy storage device 440, the long term energy storage device 445, and/or the load device(s) 125. As will be described in more detail below, the charging and discharging of the medium and long term storage devices 440, 445 is controlled based on the voltage across the short term capacitor 435. Moreover, the respective states of the clamping switches 420A, 420B are also controlled based on the voltage across the short term capacitor 435. The voltage across the short term capacitor 435 may also be referred to as the capacitor voltage V_{cap}.

The medium term energy storage device 440 has an energy storage capacity that is greater than the energy storage capacity of the short term capacitor 435 but less than the energy storage capacity of the long term energy storage device 445. In some instances, the medium term energy storage device 440 is implemented as a single capacitor that has a greater capacitance than the short term capacitor 435. In some instances, the medium term energy storage device 440 is implemented as a plurality of capacitors connected in a series and/or parallel relationship, the plurality of capacitors having a greater energy storage capacity than the short term capacitor 435. In some instances, the medium term energy storage device is implemented as a different type of energy storage device, such as a battery. As shown in FIG. 4, the medium term energy storage device 440 is charged with energy that is discharged from the short term capacitor 435. In particular, the power harvesting circuit 400 includes a first DC-DC converter 450 that is selectively controlled by the control circuit 430 to charge the medium term energy storage device 440 with energy that is discharged from the short term capacitor 435. As will be described in more detail below, the control circuit 430 controls the first DC-DC converter 450 to charge the medium term energy storage device 440 based on the capacitor voltage V_{cap}.

The energy storage capacity of the long term energy storage device 445 is greater than the respective energy storage capacities of the short and medium term energy storage devices 435, 440. In some instances, the long term energy storage device 445 is implemented as one or more supercapacitors or ultracapacitors. For example, in some instances, the long term energy storage device 445 is implemented as a bank of supercapacitors and/or ultracapacitors connected in a series and/or parallel relationship. In some instances, the long term energy storage device 445 is implemented as a different type of energy storage device, such as a battery. In some instances, the long term energy storage device 445 is implemented as a combination of one or more supercapacitors, ultracapacitors, and/or batteries. As shown in FIG. 4, the long term energy storage device 445 is charged with energy that is discharged from the short term capacitor 435. In particular, the power harvesting circuit 400 includes a second DC-DC converter 455 that is selectively controlled by the control circuit 430 to charge the long term energy storage device 445 with energy that is discharged from the short term capacitor 435. As will be described in more detail below, the control circuit 430 controls the second DC-DC converter 455 to charge the long term energy storage device 445 based on the capacitor voltage V_{cap}.

As shown in FIG. 4, the control circuit 430 is communicatively coupled to the clamping switches 420A, 420B, the first DC-DC converter 450, and the second DC-DC converter 455. In addition, the control circuit 430 includes and/or is communicatively coupled to one or more sensors sense electrical characteristics of components included in the power harvesting circuit 400. For example, the control circuit 430 includes and/or is otherwise connected to one or more voltage sensors that sense the voltage across the short term capacitor 435. As another example, the control circuit 435 includes and/or is otherwise connected to one or more current sensors that sense currents flowing through the power harvesting circuit 400, one or more temperature sensors that sense the respective temperatures of components included in the power harvesting circuit 400, and/or one or more additional voltage sensors that sense the respective voltages across other components, such as the medium and long term energy storage devices 440, 445, included in the power harvesting circuit 400. As described above, the control circuit 430 is configured to control one or more components of the power harvesting circuit 400, such as the power clamping switches 420A, 420B and the DC-DC converters 450, 455, based on the voltage across the short term energy capacitor 435. In some instances, the control circuit 430 is implemented as an analog control circuit that includes a combination of one or more discrete electronics. In other instances, the control circuit 430 is implemented as a digital control circuit that includes one or more electronic processors and/or microchip microcontrollers.

In the illustrated example, the control circuit 430 is implemented as a single control circuit that controls operation of the clamping switches 420A, 420B, charging of the medium term energy storage device 440, and charging of the long term energy storage device 445 based on the capacitor voltage V_{cap}. However, in some instances, the control circuit 430 is implemented as one or more distributed control circuits that respectively control different components of the power harvesting circuit 400. For example, in some instances, the power harvesting circuit 400 includes a first control circuit that is configured to control the clamping switches 420A, 420B based on the capacitor voltage V_{cap}, a second control circuit that is configured to control charging of the medium term energy storage device 440 based on the capacitor voltage V_{cap}, and a third control circuit that is configured to control charging of the long term energy storage device 445 based on the capacitor voltage V_{cap}. In some instances, the power harvesting circuit 400 includes a first control circuit that is configured to control operation of the clamping switches 420A, 420B based on the capacitor voltage V_{cap} and a second control circuit that is configured to control charging of the medium and long term energy storage devices 440, 445 based on the capacitor voltage V_{cap}.

During operation of the power harvesting circuit 400, the control circuit 430 determines whether to clamp or harvest the power input by the secondary wire winding 115 based on the capacitor voltage V_{cap}. The control circuit 430 determines the capacitor voltage V_{cap} based on one or more signals received from a sensor that senses the voltage across the short term capacitor 430. When the control circuit 430 determines that the capacitor voltage V_{cap} exceeds a clamping voltage threshold, the control circuit 430 turns ON the clamping switches 420A, 420B to clamp the excess input power. When the clamping switches 420A, 420B are turned ON to clamp the excess input power, the input current flows through the clamping switches 420A, 420B but does not flow through the bridge diodes 415A, 415B or the energy storage devices 435, 440, and 445. In contrast, as described above, current flows through two of the bridge diodes 310A-310D and the active switch 330 while the power harvesting circuit 120 clamps excess input power received from the secondary wire winding 115. Therefore, since the clamping switches 420A, 420B consume significantly less power than the two of the bridge diodes 310A-310D and the active switch 330 (e.g., 90-97% less), the power harvesting circuit 400 clamps excess power much more efficiently than the power harvesting circuit 120. In some instances, the value of the clamping voltage threshold is 40V. In some instances, the value of the clamping voltage threshold is 45V. In some instances, the value of the clamping voltage threshold is 50V or greater. In some instances, the clamping voltage threshold has a different value.

While the clamping switches 420A, 420B are turned ON to clamp excess input power, the load device(s) 125 are powered with energy stored in the medium and/or long term energy storage devices 440, 445. In some instances, only the medium term energy storage device 440 is discharged to power the load device(s) 125 while the clamping switches 420A, 420B are turned ON. In some instances, only the long term energy storage device 445 is discharged to power the load device(s) 125 while the clamping switches 420A, 420B are turned ON. In some instances, only the short term energy storage device 435 is discharged to power the load device(s) 125 while the clamping switches 420A, 420B. As shown in FIG. 4, the power harvesting circuit 400 includes a reverse protection diode 460 that is arranged to prevent current discharged from the medium term energy storage device 440 from flowing to the long term energy storage device 445. In some instances, the power harvesting circuit 400 includes an additional DC-DC converter that converts the voltage level of power output by the energy storage devices 435, 440, and 445 into one or more voltage levels used for powering the load device(s) 125. In such instances, the additional DC-DC converter may be controlled by the control circuit 430 or some other control circuit.

When the control circuit 430 determines that the capacitor voltage V_{cap} is less than the clamping voltage threshold, the control circuit 430 turns OFF the clamping switches 420A, 420B to enable the harvesting of energy from the conductor 105. While the clamping switches 420A, 420B are OFF, the control circuit 430 determines whether to charge and/or discharge the energy storage devices 435, 440, 445 based on the voltage across the short term capacitor 435. For example, in some instances, the control circuit 430 determines whether to charge the medium term energy storage device 440 based on a comparison between the capacitor voltage V_{cap} and a medium term voltage threshold. As another example, in some instances, the control circuit 430 determines whether to charge the long term energy storage device 445 based on a comparison between the capacitor voltage V_{cap} and a long term voltage threshold.

Similar to the above-described power harvesting circuit 120, the power harvesting circuit 400 operates inefficiently when the voltage across the short term capacitor 435 is low (e.g., less than 5-10V) because the power consumed by the two current conducting diodes included the full wave rectifier 410 (e.g., one of the bridge diodes 415A, 415B and one of the integrated body diodes 425A, 425B) accounts for a large percentage of the total power consumed by the system. For example, if it is assumed that the respective voltage drop across each of the two diodes that conduct current while the clamping switches 420A, 420B are turned OFF is 0.7V, approximately 30% of the power harvested from the conductor 105 is lost to consumption by the diodes when the voltage across the short term capacitor 435 is 5V. In contrast if it is still assumed that the respective voltage drop across each of the two diodes that conduct current while the clamping switches 420A, 420B are turned OFF is 0.7V, only about 3.4% of the power harvested from the conductor 105 is lost to consumption by the diodes when the voltage across the short term capacitor 435 is 40V. Thus, to minimize the power losses attributed to rectification of the AC input power, the short term capacitor 435 and control circuit 430 should be designed to minimize the amount of time at which the power harvesting circuit 400 is operated at a low capacitor voltage V_{cap}.

Furthermore, the power harvesting circuit 400 operates inefficiently at low capacitor voltages V_{cap} (e.g., voltage across short term capacitor 435 is less than 5-10V) because of losses attributed to impedance mismatching between the input transformer and the short term capacitor 435. For example, for energy harvesting systems 100 in which the turns ratio N of the transformer (e.g., 1/number of turns in the secondary wire winding 115) is a fixed value, the power harvesting circuit 400 is able to transfer significantly larger amounts of power (e.g., 90%-100% more) when the impedance of the short term capacitor 435 and other components in the power harvesting circuit 400 is matched with the input impedance of the transformer. Accordingly, in some instances, the capacitance value of the short term capacitor 435 is selected to optimize impedance matching with the transformer when the voltage across the short term capacitor 435 is relatively high (e.g., 40V). In such instances, the amount of power harvested by the power harvesting circuit 400 is optimized when the voltage across the short term capacitor 435 is relatively high (e.g., 40V); however, the amount of power harvested by the same power harvesting circuit 400 would be very low (e.g., greater than 90% less) when the voltage across the short term capacitor 435 is low (e.g., 5V) due to the impedance mismatch as described above. Thus, to further minimize the power losses attributed to impedance mismatch between the transformer and the power harvesting circuit 400, the short term capacitor 435, the control circuit 430, and other components included in the power harvesting circuit 400 are further designed and/or optimized to minimize the amount of time at which the power harvesting circuit 400 is operated at a low capacitor voltage V_{cap}.

In some instances, the energy harvesting system 100 includes a transformer that has a turns ratio that can be dynamically adjusted. In such instances, the turns ratio of the transformer may be adjusted based on the voltage across the short term capacitor 435.

To reduce the amount of time at which the voltage across the short term capacitor 435 remains low during operation of the power harvesting circuit 400, the control circuit 430 is configured to prevent charging of the medium and long term energy storage devices 440, 445 while the voltage across the short term capacitor 435 is low (e.g., less than 20-25). That way, most or all of the energy harvested from the conductor 105 is used to charge the short term capacitor 435, thereby quickly increasing the voltage across the short term capacitor 435. As an example, when the control circuit 430 determines that the capacitor voltage V_{cap} is less than a medium term voltage threshold, the control circuit 430 turns OFF the first and second DC-DC converters 450, 455 to prevent charging of the medium and long term energy storage devices 440, 445. In some instances, the value of the medium term voltage threshold is 20V. In some instances, the value of the medium term voltage threshold is 25V. In some instances, the value of the medium term voltage threshold is 28V. In some instances, the medium term voltage threshold has a different value.

In some instances, the energy stored in the medium and/or long term energy storage devices 440, 445 is used to power the load device(s) 125 while the voltage across the short term capacitor 435 is low (e.g., less than 20-25V). In some instances, the DC power output by the full wave rectifier 410 is used to charge the short term capacitor 435 and power the load device(s) 125. In some instances, no power is provided to the load device(s) 125 while the voltage across the short term capacitor 435 is low. That is, in such instances, the power harvesting circuit 400 does not output any power to the load device(s) 125 until the short term capacitor 435 is charged to a minimum voltage (e.g., 20-25V).

As the voltage across the short term capacitor 435 increases, the medium and/or long term energy storage devices 440, 445 can be charged without sacrificing too much efficiency. Accordingly, when the voltage across the short term capacitor 435 exceeds the medium term voltage threshold (e.g., the voltage across the short term capacitor 435 is no longer low), the control circuit 430 controls the first DC-DC converter 450 to charge the medium term energy storage device 440. In some instances, the first DC-DC converter 450 charges the medium term energy storage device 440 with power output by the full wave rectifier 410 and/or power discharged by the short term capacitor 435.

Furthermore, when the voltage across the short term capacitor 435 exceeds a long term voltage threshold, which is greater than the medium term voltage threshold, the control circuit 430 controls the second DC-DC converter 455 to charge the long term energy storage device 445. In some instances, the second DC-DC converter 455 charges the long term energy storage device 445 with power output by the full wave rectifier 410 and/or power discharged by the short term capacitor 435. In some instances, the control circuit 430 controls both the first DC-DC converter 450 to charge the medium term energy storage device 440 and the second DC-DC converter 455 to charge the long term energy storage device 445 when the voltage across the short term capacitor 435 exceeds the long term voltage threshold. In some instances, the control circuit 430 controls the second DC-DC converter 455 to charge the long term energy storage device 445 but prevents charging of the medium term energy storage device 440 when the voltage across the short term capacitor 435 exceeds the long term voltage threshold. In some instances, the value of the long term voltage threshold is 30 V. In some instances, the value of the long term voltage threshold is 33V. In some instances, the long term voltage threshold has a different value.

During operation of the power harvesting circuit 400, the voltage across the short term capacitor 435 frequently, or even continuously, changes. Accordingly, the control circuit 430 is configured to dynamically adjust operation of the clamping switches 420A, 420B, the first DC-DC converter 450, and/or the second DC-DC converter 455 based on an updated, or current, value of the capacitor voltage V_{cap}. In some instances, the control circuit 435 is configured to operate the power harvesting circuit 400 in a particular state based on the current capacitor voltage V_{cap}. In such instances, the various states at which the power harvesting circuit 430 is operated correspond to respective ranges of the voltage across the short term capacitor 435.

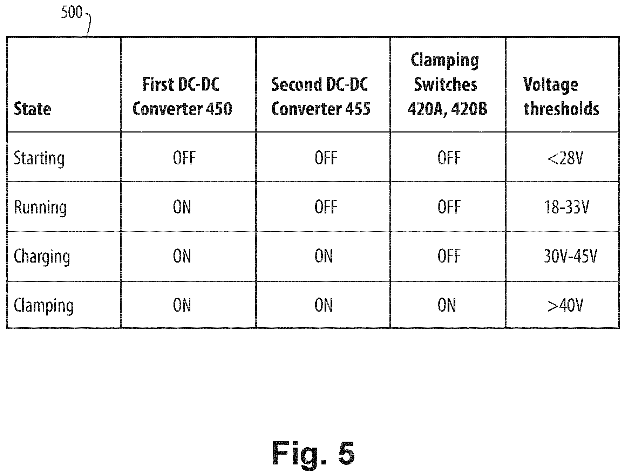

FIG. 5 illustrates a table 500 that includes various operating states of the power harvesting circuit 400 that are dependent on the voltage across the short term capacitor 435. It should be understood that some of the voltage ranges associated with respective operating states of the power harvesting circuit 400 overlap to prevent unstable transitions between operating states of the power harvesting circuit 400. Furthermore, it should be understood that the voltage values included in the state table 500 are provided as examples and are not intended to limit implementation of the power harvesting circuit 400 in any way. Thus, in some instances, the voltage ranges associated with the respective operating states of the power harvesting circuit 400 and/or the number of operating states of the power harvesting circuit 400 may differ.

In the illustrated example of FIG. 5, the control circuit 430 operates the power harvesting circuit 400 in a starting state when the voltage across the short term capacitor 435 is within a first voltage range (e.g., less than 28V). While the power harvesting circuit 400 operates in the starting state, the control circuit 430 turns OFF the clamping switches 420A, 420B to prevent excess power clamping. In addition, the control circuit 430 turns OFF the first and second DC-DC converters 450, 455 to prevent charging of the medium and long term energy storage devices 440, 445 while the power harvesting circuit 400 is operated in the starting state.

When the short term capacitor 435 is charged during the starting state, the voltage across the short term capacitor 435 eventually increases past a first particular voltage level, or threshold, (e.g. 28V) such that the capacitor voltage V_{cap} increases from the first voltage range (e.g. lower than 28V) to a second voltage range (e.g., 18-33V). Accordingly, the control circuit 430 transitions operation of the power harvesting circuit 400 from the starting state to a running state when the voltage across the short term capacitor 435 increases to the second voltage range (e.g., 18-33V). While the power harvesting circuit 400 operates in the running state, the control circuit 430 turns OFF the clamping switches 420A, 420B to prevent power clamping. In addition, the control circuit 430 turns ON the first DC-DC converter 450 to enable charging of the medium term energy storage device 440 and turns OFF the second DC-DC converter 455 to prevent charging of the long term energy storage device 445 while the power harvesting circuit 400 operates in the running state.

When the short term capacitor 435 is charged during the running state, the voltage across the short term capacitor 435 eventually increases past a second particular voltage level, or threshold, (e.g., 33V) such that the capacitor voltage V_{cap} transitions from the second voltage range (18-33V) to a third voltage range (e.g., 30-45V). Accordingly, the control circuit 430 transitions operation of the power harvesting circuit 400 from the running state to a charging state when the voltage across the short term capacitor 435 increases to the third voltage range (e.g., 30-45V). While the power harvesting circuit 400 operates in the charging state, the control circuit 430 turns OFF the clamping switches 420A, 420B to prevent excess power clamping. In addition, the control circuit 430 turns ON the first and second DC-DC converters 450, 455 to enable charging of the medium and long term energy storage devices 440, 445 while the power harvesting circuit 400 operates in the charging state.

In some instances, when the short term capacitor 435 is charged during the charging state, the voltage across the short term capacitor 435 increases past a third particular voltage level, or threshold, (e.g., 45V) such that the capacitor voltage V_{cap} increases from the third voltage range (e.g., 30-45V) to a fourth voltage range (e.g., greater than 40V). Accordingly, in such instances, the control circuit 420 transitions operation of the power harvesting circuit 400 from the charging state to a clamping state when the voltage across the short term capacitor 435 is increased to the fourth voltage range (e.g., greater than 40V). While the power harvesting circuit 400 operates in the clamping state, the control circuit 430 turns ON the clamping switches 420A, 420B to clamp excess power harvested from the conductor 105. In addition, the control circuit 430 turns ON the first and second DC-DC converters 450, 455 while the power harvesting circuit 400 operates in the clamping state.

While the power harvesting circuit 400 is operated in the clamping state, the short term capacitor 435 is discharged to charge the medium and long term energy storage devices 440, 445. When the short term capacitor 435 is discharged during operation in the clamping state, the voltage across the short term capacitor 435 decreases such that the voltage across the short term capacitor 435 eventually decreases from the fourth voltage range (e.g., greater than 40) to the third voltage range (e.g., 30-45V). Accordingly, the control circuit 430 transitions operation of the power harvesting circuit 400 from the clamping state to the charging state in response to the capacitor voltage V_{cap} decreasing to the third voltage range.

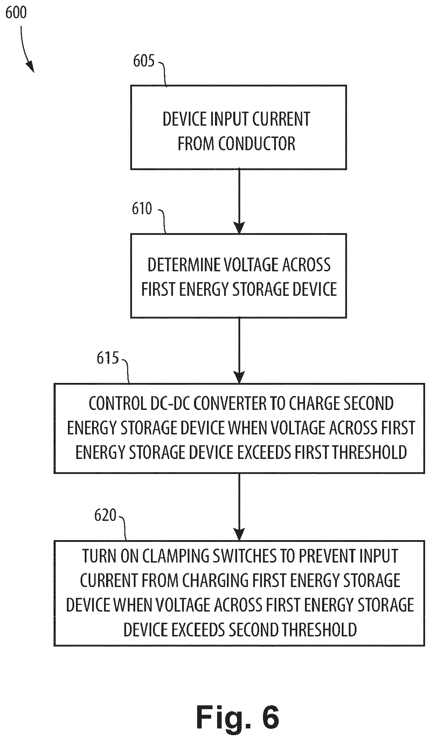

FIG. 6 is a flowchart illustrating a method, or process, 600 for harvesting power from a conductor, such as the conductor 105, included in a power distribution network. The process 600 includes receiving, via a transformer (e.g., the magnetic core 110 and the secondary wire winding 115) an input current from the conductor 105 (block 605). The process 600 proceeds with determining the voltage across a first energy storage device, such as the short term capacitor 435 (block 610). As described above, in some instances, the control circuit 430 determines the voltage across the short term capacitor 435 based on one or more signals received from a voltage sensor.

At block 615, the process 600 proceeds with controlling a DC-DC converter, such as the first or second DC-DC converters 450, 455 or the second DC, to charge a second energy storage device, such as the medium or long term energy storage devices 440, 445, when the voltage across the first energy storage device exceeds a first threshold (e.g., the medium term voltage threshold or the long term voltage threshold). At block 620, the process 600 proceeds with turning ON first and second switches, such as the clamping switches 420A, 420B, to prevent the charging of the first energy storage device when the voltage across the first energy storage device exceeds a second threshold (e.g., the clamping threshold).

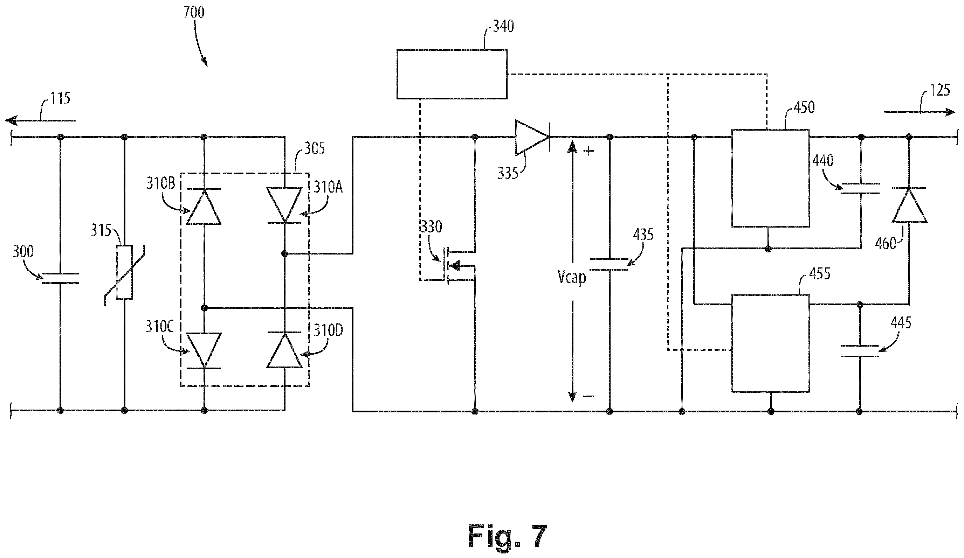

In some instances, a power harvesting circuit implemented in the energy harvesting system 100 includes one or more components from the power harvesting circuit 120 and one or more components from the power harvesting circuit 400. FIG. 7 illustrates an example power harvesting circuit 700 that may be implemented in the energy harvesting system 100. As shown, the power harvesting circuit 700 includes the full wave rectifier 305, which is formed of the bridge diodes 310A-310D, and the active switch 330 that are described above with respect to the power harvesting circuit 120. Accordingly, similar to the power harvesting circuit 120, power is consumed by three diodes (e.g., two of the bridge diodes 310A-310B included in the full wave rectifier 305 and the reverse protection diode 335) while the power harvesting circuit 700 harvests energy from the conductor 105. However, as further shown in FIG. 7, the power harvesting circuit 700 includes the multi-level energy storage devices 435, 440, and 445 that are described above with respect to the power harvesting circuit 400. Therefore, similar to the power harvesting circuit 400, the amount of time at which the power harvesting circuit 700 harvests energy from the conductor 105 while the voltage across the short term capacitor 435 is low is reduced.

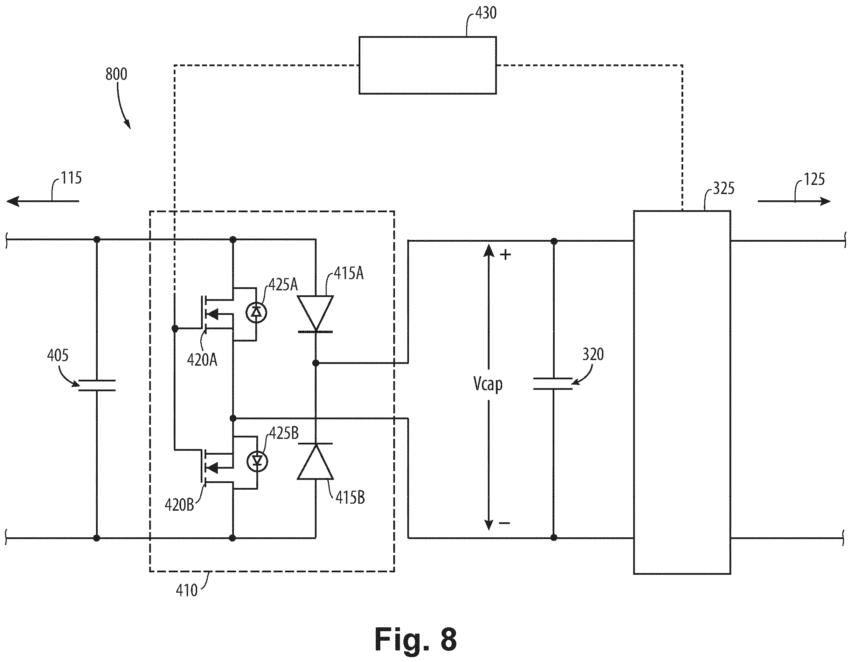

FIG. 8 illustrates another example power harvesting circuit 800 that may be implemented in the energy harvesting system 100. As shown, the power harvesting circuit 800 includes the full wave rectifier 410, which is formed of the bridge diodes 415A, 415B and the clamping switches 420A, 420B. Accordingly, similar to the power harvesting circuit 400, less power is consumed by the clamping switches 420A, 420B during excess power clamping than when compared to the amount of power consumed by the bridge diodes 310A-310D and the active switch 330 while the power harvesting circuit 120 clamps excess power. However, as further shown in FIG. 8, the power harvesting circuit 800 only includes a single energy storage device 320. Thus, similar to the power harvesting circuit 120, the power harvesting circuit 800 may operate inefficiently at power harvesting start-up when the voltage across the energy storage device 320 is low.

### Effects

(1) An energy harvesting system including a conductor that conducts a first current, a transformer that outputs a second current based on the first current flowing through the conductor, an energy storage device, and a rectifier connected between the transformer and the energy storage device, the rectifier including a first switch, a second switch, a first diode, and a second diode. The energy harvesting system further includes a control circuit communicatively coupled to the first and second switches, the control circuit configured to turn on the first and second switches to prevent charging of the energy storage device when a voltage across the energy storage device exceeds a threshold and turn off the first and second switches to charge the energy storage device with a direct current (DC) output by the rectifier when the voltage across the energy storage device is less than the threshold.
(2) The energy harvesting system according to (1), wherein the first and second switches are metal oxide semiconductor field effect transistors (MOSFETs) and wherein the first switch includes a first body diode and the second switch includes a second body diode.
(3) The energy harvesting system according to (2), wherein the first diode, the second diode, the first body diode, and the second body diode convert the second current into the DC current when the first and second switches are turned off by the control circuit, and wherein the first and second switches conduct the second current away from the energy storage device when the first and second switches are turned on by the control circuit.
(4) The energy harvesting system according to any one of (1) to (3), further including a second energy storage device connected to the first energy storage device, an energy storage capacity of the second energy storage device being greater than an energy storage capacity of the first energy storage device, and a first DC-DC converter connected in parallel with the second energy storage device.
(5) The energy harvesting system according to (4), wherein the control circuit is further configured to turn on the first DC-DC converter to charge the second energy storage device when the voltage across the first energy storage device is less than the threshold and a greater than a second threshold.
(6) The energy harvesting system according to (5), further including a third energy storage device connected to the first energy storage device, an energy storage capacity of the third energy storage device being greater than the energy storage capacities of the first and second energy storage devices, and a second DC-DC converter connected in parallel with the third energy storage device.
(7) The energy harvesting system according to (6), wherein the control circuit is further configured to turn on the second DC-DC converter to charge the third energy storage device when the voltage across the first energy storage device is less than the threshold and a greater than a third threshold and wherein the third threshold is greater than the second threshold.
(8) The energy harvesting system according to (6) or (7), wherein the energy storage device is a short term energy storage device, the second energy storage device is a medium term energy storage device, and the third energy storage device is a long term energy storage device.
(9) The energy harvesting system according to any one of (6) to (8), wherein the energy storage device is a first capacitor having a first capacitance, wherein the second energy storage device includes a second capacitor having a second capacitance, and wherein the third energy storage device includes a plurality of supercapacitors.
(10) The energy harvesting system according to any one of (6) to (9), wherein the control circuit is further configured to turn off the first and second DC-DC converters to prevent charging of the second and third energy storage devices when the voltage across the energy storage device is less than the second threshold.
(11) The energy harvesting system according to any one of (6) to (10) further including a reverse protection diode arranged to prevent current discharged from the second energy storage device from flowing to the third energy storage device.
(12) An energy harvesting system including a rectifier configured to convert an alternating current (AC) current harvested from a conductor into a direct current (DC) current, a first energy storage device connected to an output side of the rectifier, a switch connected in parallel with the first energy storage device, a second energy storage device connected in parallel with the first energy storage device, a DC-DC converter configured to control charging of the second energy storage device, and a control circuit connected to the switch and the DC-DC converter. The control circuit is configured to turn on the switch to prevent the DC current from charging the first energy storage device when a voltage across the first energy storage device exceeds a first threshold, turn off the switch to charge the first energy storage device with the DC current when the voltage across the first energy storage device is less than the first threshold, and turn on the DC-DC converter to charge the second energy storage device when the voltage across the first energy storage device exceeds a second threshold, the second threshold being less than the first threshold.
(13) The energy harvesting system according to (12), wherein an energy storage capacity of the first energy storage device is less than an energy storage capacity of the second energy storage device.
(14) The energy harvesting system according to any one of (12) to (13), wherein the first energy storage device is a first capacitor having a first capacitance and the second energy storage device is a second capacitor having a second capacitance and wherein the second capacitance is greater than the first capacitance.
(15) The energy harvesting system according to any one of (12) to (14), wherein the first energy storage device includes a first capacitor and the second energy storage device includes a plurality of supercapacitors.
(16) The energy harvesting system according to any one of (12) to (15), further including a third energy storage device connected to the first energy storage device and a second DC-DC converter configured to control charging of the third energy storage device.
(17) The energy harvesting system according to (16), wherein the control circuit is further configured to turn on the second DC-DC converter to charge the third energy storage device when the voltage across the first energy storage device exceeds a third threshold and wherein the third threshold is greater than the second threshold and less than the first threshold.
(18) The energy harvesting system according to any one of (16) to (17), wherein an energy storage capacity of the third energy storage device is greater than an energy storage capacity of the first energy storage device and wherein the energy storage capacity of the third energy storage device is greater than an energy storage capacity of the second energy storage device.
(19) An energy harvesting system including a conductor that conducts a first current, a transformer that outputs a second current based on the first current flowing through the conductor, a first energy storage device, a metal oxide semiconductor field effect transistor (MOSFET) that is turned on to prevent the second current from flowing to the first energy storage device when a voltage across the first energy storage device exceeds a first threshold, a second energy storage device connected to the first energy storage device, a first DC-DC converter that is turned on to charge the second energy storage device when the voltage across the first energy storage device exceeds a second threshold, the second threshold being less than the first threshold, a third energy storage device connected to the first energy storage device, and a second DC-DC converter that is turned on to charge the third energy storage device when the voltage across the first energy storage device exceeds a third threshold, the third threshold being greater than the second threshold and less than the first threshold.
(20) A method of harvesting power from a power distribution network including receiving, via a transformer, an input current from a conductor included in the power distribution network, determining a voltage across a first energy storage device, controlling a DC-DC converter to charge a second energy storage device when the voltage across the first energy storage device is greater than a first threshold, and turning on first and second switches to prevent charging of the first energy storage device when the voltage across the first energy storage device is greater than a second threshold.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various instances for the purpose of streamlining the disclosure. This method of disclosure is not to be interpreted as reflecting an intention that the claimed instances incorporate more features than are expressly recited in each claim. Rather, as the following claims reflect, inventive subject matter lies in less than all features of a single disclosed instance. Thus the following claims are hereby incorporated into the Detailed Description, with each claim standing on its own as a separately claimed subject matter.

## Claims

1. An energy harvesting system comprising:
a conductor that conducts a first current;
a transformer that outputs a second current based on the first current flowing through the conductor;
an energy storage device;
a rectifier connected between the transformer and the energy storage device, the rectifier including a first switch, a second switch, a first diode, and a second diode; and
a control circuit communicatively coupled to the first and second switches, the control circuit configured to:
turn on the first and second switches to prevent charging of the energy storage device when a voltage across the energy storage device exceeds a threshold; and
turn off the first and second switches to charge the energy storage device with a direct current (DC) current output by the rectifier when the voltage across the energy storage device is less than the threshold.

2. The energy harvesting system according to claim 1, wherein the first and second switches are metal oxide semiconductor field effect transistors (MOSFETs); and
wherein the first switch includes a first body diode and the second switch includes a second body diode.

3. The energy harvesting system according to claim 2, wherein the first diode, the second diode, the first body diode, and the second body diode convert the second current into the DC current when the first and second switches are turned off by the control circuit; and
wherein the first and second switches conduct the second current away from the energy storage device when the first and second switches are turned on by the control circuit.

4. The energy harvesting system according to any one of claim 1 to claim 3, further comprising:
a second energy storage device connected to the first energy storage device, an energy storage capacity of the second energy storage device being greater than an energy storage capacity of the first energy storage device; and
a first DC-DC converter connected in parallel with the second energy storage device.

5. The energy harvesting system according to claim 4, wherein the control circuit is further configured to turn on the first DC-DC converter to charge the second energy storage device when the voltage across the first energy storage device is less than the threshold and a greater than a second threshold.

6. The energy harvesting system according to claim 5, further comprising:
a third energy storage device connected to the first energy storage device, an energy storage capacity of the third energy storage device being greater than the energy storage capacities of the first and second energy storage devices; and
a second DC-DC converter connected in parallel with the third energy storage device.

7. The energy harvesting system according to claim 6, wherein the control circuit is further configured to turn on the second DC-DC converter to charge the third energy storage device when the voltage across the first energy storage device is less than the threshold and a greater than a third threshold;
wherein the third threshold is greater than the second threshold.

8. The energy harvesting system according to any one of claim 6 to claim 7, wherein the energy storage device is a short term energy storage device, the second energy storage device is a medium term energy storage device, and the third energy storage device is a long term energy storage device.

9. The energy harvesting system according to any one of claim 6 to claim 8, wherein the energy storage device is a first capacitor having a first capacitance;
wherein the second energy storage device includes a second capacitor having a second capacitance; and
wherein the third energy storage device includes a plurality of supercapacitors.

10. The energy harvesting system according to any one of claim 6 to claim 9, wherein the control circuit is further configured to turn off the first and second DC-DC converters to prevent charging of the second and third energy storage devices when the voltage across the energy storage device is less than the second threshold.

11. The energy harvesting system according to any one of claim 6 to claim 10, further comprising a reverse protection diode arranged to prevent current discharged from the second energy storage device from flowing to the third energy storage device.

12. An energy harvesting system comprising:
a rectifier configured to convert an alternating current (AC) current harvested from a conductor into a direct current (DC) current;
a first energy storage device connected to an output side of the rectifier;
a switch connected in parallel with the first energy storage device;
a second energy storage device connected in parallel with the first energy storage device;
a DC-DC converter configured to control charging of the second energy storage device; and
a control circuit connected to the switch and the DC-DC converter, the control circuit configured to:
turn on the switch to prevent the DC current from charging the first energy storage device when a voltage across the first energy storage device exceeds a first threshold;
turn off the switch to charge the first energy storage device with the DC current when the voltage across the first energy storage device is less than the first threshold; and
turn on the DC-DC converter to charge the second energy storage device when the voltage across the first energy storage device exceeds a second threshold, the second threshold being less than the first threshold.

13. The energy harvesting system according to claim 12, wherein the first energy storage device is a first capacitor having a first capacitance and the second energy storage device is a second capacitor having a second capacitance;
wherein the second capacitance is greater than the first capacitance.

14. The energy harvesting system according to any one of claim 12 to claim 13, further comprising a third energy storage device connected to the first energy storage device; and
a second DC-DC converter configured to control charging of the third energy storage device.

15. The energy harvesting system according to claim 14, wherein the control circuit is further configured to turn on the second DC-DC converter to charge the third energy storage device when the voltage across the first energy storage device exceeds a third threshold;
wherein the third threshold is greater than the second threshold and less than the first threshold.
